(19) **Europäisches Patentamt / European Patent Office / Office européen des brevets**

(11) **EP 4 769 934 A1**

(12) **EUROPEAN PATENT APPLICATION**

(43) Date of publication:
**01.07.2026 Bulletin 2026/27**

(21) Application number: **25222099.1**

(22) Date of filing: **10.12.2025**

(51) International Patent Classification (IPC):
**H02P 23/20** $^{(2016.01)}$     **H02P 25/03** $^{(2016.01)}$

(52) Cooperative Patent Classification (CPC):
**H02P 23/20; H02P 25/03;** H02P 2203/03;
H02P 2203/05; H02P 2203/11

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.12.2024 JP 2024233111**

(71) Applicant: **Canon Kabushiki Kaisha
Tokyo 146-8501 (JP)**

(72) Inventor: **ISOMI, Yusuke
Tokyo 146-8501 (JP)**

(74) Representative: **TBK
Bavariaring 4-6
80336 München (DE)**

(54) **MOTOR CONTROL APPARATUS AND IMAGE FORMING APPARATUS**

(57)    A motor control apparatus detects currents flowing through coils of respective phases in a motor, estimates a rotational position of a rotor of the motor based on current values of the detected currents, and determines, in motor control that switches an excitation phase of the motor in accordance with a target rotational speed of the rotor, a current command value for a current component that generates torque in the rotor, based on a phase difference between a command value and an estimated value for the rotational position. The motor control apparatus controls currents supplied to the coils of the respective phases in the motor in accordance with the determined current command value determined by the determining unit.

**FIG. 8**

```
        START
          │
          ▼
INITIAL SETTING OF                  S101
TORQUE COMMAND VALUE Iq_ref
          │
          ▼
START TORQUE-BASED CONTROL          S102
          │
          ▼
GENERATE COMMAND                    S103
ELECTRICAL ANGLE θ_ref
          │
          ▼
OBTAIN ESTIMATED                    S104
ELECTRICAL ANGLE θ_est
          │
          ▼
OBTAIN PHASE DIFFERENCE Δθ          S105
BETWEEN θ_ref AND θ_est
          │
          ▼
UPDATE TORQUE COMMAND VALUE Iq_ref  S106
BASED ON PHASE DIFFERENCE
COMMAND VALUE Δθ_ref
AND PHASE DIFFERENCE Δθ
          │
          ▼
END TORQUE-BASED      S107
CONTROL?
    NO │        │ YES
       └────┐   ▼
          END
```

EP 4 769 934 A1

# Description

## TECHNICAL FIELD

The present disclosure relates to a motor control apparatus and an image forming apparatus.

## BACKGROUND

There are cases where a motor of a sensorless type, which does not include a sensor such as an encoder for detecting the rotational position (rotational phase) of a rotor, is used as a driving source for rotational members, such as rollers for paper conveyance, used in an image forming apparatus. The application of sensorless vector control, or V/f control with a smaller computation amount than the sensorless vector control, has been discussed as a technique to control such a motor (Japanese Patent Laid-Open No. 2022-147188).

In the aforementioned sensorless vector control or V/f control, in a case where the load placed on the motor has increased in a short time period, the excitation timing of the motor may be delayed in response to delay of the rotational position of the rotor relative to the ideal position. In this way, the motor is driven without missing steps, but on the other hand, there may be a decrease in the ability of the rotor to follow a positional command value. Also, the rotational speed of the motor may exhibit overshoot or undershoot when rapid acceleration or deceleration control has been performed on the motor. For this reason, forced commutation control that switches the excitation phase of the motor in accordance with a target rotational speed can be applied in order to increase the positional control accuracy of the motor.

## SUMMARY

However, in order to drive the motor without missing steps in the forced commutation control, the motor needs to be excited using a current that is sufficiently large relative to the load placed on the motor. This can lead to a decrease in the electrical efficiency of the motor and an increase in the temperature of windings (coils).

In view of the above, the present disclosure provides technology for realizing more efficient motor control in forced commutation control.

The present disclosure in its first aspect provides a motor control apparatus as specified in claim 1. Optional features are specified in claim 2 to 12.

The present disclosure in its second aspect provides an image forming apparatus as specified in claim 13. Optional features are specified in claim 14 to 15.

Features of the present disclosure will become apparent from the following description of embodiments with reference to the attached drawings. The following description of embodiments is described by way of example.

## BRIEF DESCRIPTION OF THE DRAWINGS

The accompanying drawings, which are incorporated in and constitute a part of the specification, illustrate embodiments of the present disclosure, and together with the description, serve to explain the principles of the embodiments.

Fig. 1A is a cross-sectional diagram showing an exemplary configuration of a printer.
Fig. 1B is a block diagram showing an exemplary control configuration of the printer.
Fig. 2 shows an exemplary configuration of a motor control unit.
Fig. 3 shows an exemplary configuration of a processing unit (a comparative example).
Figs. 4A to 4C show an exemplary configuration and exemplary operations of a motor.
Figs. 5A and 5B show examples of changes in a rotational speed of a rotor for a case where forced commutation control has been performed.
Fig. 6A shows an exemplary configuration of the processing unit (a comparative example).
Fig. 6B shows an exemplary configuration of a target current determining unit.
Figs. 7A to 7C show examples of changes in parameters related to the motor.
Fig. 8 is a flowchart showing an exemplary procedure of control on the motor.
Fig. 9 shows examples of changes in parameters related to the motor (a second embodiment).
Fig. 10 is a flowchart showing an exemplary procedure of control on the motor (the second embodiment).

## DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

## First Embodiment

In the following embodiment, a laser printer that forms images using an electrophotographic method will be described as an example of an image forming apparatus of the present disclosure. The image forming apparatus may be, for example, any of a printing apparatus, a printer, a copier, a multi-functional peripheral, and a facsimile apparatus. Also, a recording method of the image forming apparatus is not limited to the electrophotographic method, and may be, for example, an inkjet method and the like.

<Image Forming Apparatus>

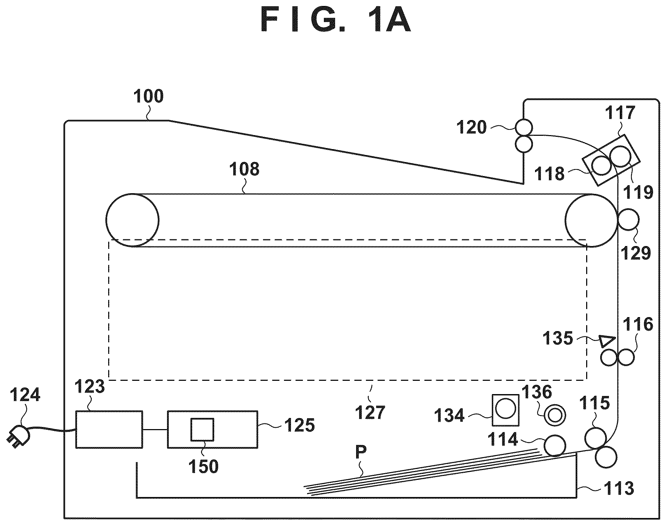

Fig. 1A is a schematic cross-sectional diagram showing an exemplary configuration of a printer 100 according to the first embodiment. Although the printer 100 is configured as a color laser printer that forms a color image (multicolor image) in the present embodiment, it may be configured as a monochrome laser printer that forms a monochrome image (single-color image).

The printer 100 is provided with an image forming unit 127 that includes forming units for forming toner images in respective colors, namely yellow, magenta, cyan, and black. The forming unit corresponding to each color includes a charging unit, a photosensitive member, an exposure unit, a development unit, a primary transfer unit (not shown), and the like, and forms a toner image in a corresponding color on the photosensitive member through an electrophotographic process. Specifically, in the forming unit, an electrostatic latent image is formed on the photosensitive member as a result of the charging unit charging the photosensitive member and the exposure unit exposing the charged photosensitive member to light that is based on image data, and the toner image in the corresponding color is formed on the photosensitive member as a result of the development unit developing the electrostatic latent image using toner. The toner images of the respective colors that have been formed on the corresponding photosensitive members by the image forming unit 127 are transferred to an intermediate transfer belt 108 by the primary transfer unit in such a manner that they overlap one another. Consequently, a multicolor toner image is formed on the intermediate transfer belt 108.

In accordance with rotation of the intermediate transfer belt 108, the toner image formed on the intermediate transfer belt 108 is conveyed to a position opposing a secondary transfer roller 129 (a secondary transfer position). Meanwhile, a recording material P stacked (stowed) in a feed cassette 113 (a feed unit) is fed to a conveyance path by a feed roller 114, and then conveyed by a conveyance roller 115 and a registration roller 116 provided on the conveyance path. In this way, the recording material P is conveyed from the feed cassette 113 to the position opposing the secondary transfer roller 129 (the secondary transfer position) via the conveyance path. At the secondary transfer position, the secondary transfer roller 129 transfers the toner image from the intermediate transfer belt 108 to the recording material P.

The recording material P on which the toner image has been transferred is conveyed to a fixing device 117. The fixing device 117 includes a heating roller 118 and a pressurizing roller 119. The fixing device 117 applies heat and pressure to the recording material P with use of the heating roller 118 and the pressurizing roller 119, thereby causing the toner image to be fixed on the recording material P. After the toner image has been fixed, the recording material P is discharged to the outside of the printer 100 by a discharge roller 120.

The feed roller 114 is driven to rotate by a driving force that is transmitted from a motor 134 for conveying the recording material P via a feed clutch 136. The driving force of the motor 134 is not transmitted to the feed roller 114 in a time period in which the feed clutch 136 is OFF, and is transmitted to the feed roller 114 in a time period in which the feed clutch 136 is ON. Switching between ON and OFF of the feed clutch 136 is controlled by a control unit 150. The conveyance roller 115 and the registration roller 116, too, are driven to rotate by the driving force transmitted from the motor 134. The conveyance roller 115 and the registration roller 116 are driven to rotate so that the recording material P is conveyed to the secondary transfer position at a predetermined timing based on an output signal of a conveyance sensor 135. The conveyance sensor 135 is configured to detect the recording material P conveyed on the conveyance path, and output a signal indicating a detection result.

The printer 100 includes a control substrate 125 and a low-voltage power source (switching power source) 123. The control unit 150 is mounted on the control substrate 125. The control unit 150 includes one or more processors (a CPU and the like) and one or more memories (a ROM and the like), and controls the operations of the entire apparatus. The low-voltage power source 123 converts an alternating-current (AC) voltage input via a power source cable 124 into a direct-current (DC) voltage used inside the printer 100 and outputs the DC voltage, and the DC voltage is supplied to each device (the control substrate 125 and the like) inside the printer 100.

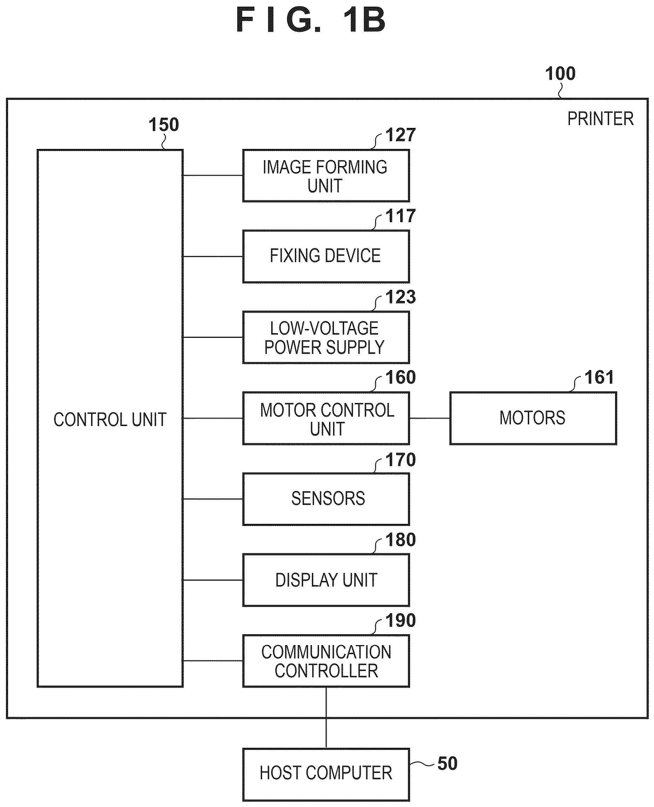

Fig. 1B is a block diagram showing an exemplary control configuration of the printer 100. The printer 100 further includes the control unit 150, a motor control unit 160, a group of motors 161, a group of sensors 170, a display unit 180, and a communication controller 190.

The control unit 150 includes a microcomputer (one or more processors) and one or more memories. The microcomputer controls each device inside the printer 100 based on various types of control programs and various types of data stored in a memory. The group of sensors 170 is a plurality of sensors for detecting, for example, a state of each device inside the printer 100 or a state of a recording material P, and includes the conveyance sensor 135. The communication controller 190 performs communication with an external apparatus, such as a host computer 50. For example, the communication controller 190 receives image data for printing (for image formation) from the host computer 50.

The motor control unit 160 is a motor control apparatus that controls driving of each motor (e.g., the motor 134) included in the group of motors 161 in accordance with an instruction from the control unit 150. Each motor included in the group of motors 161 is used as a source of motion power for each device inside the printer 100. The motor 134 is an example of a motor that drives a load inside the printer 100.

Upon receiving image data of an image to be formed from the host computer 50 via the communication controller 190, the control unit 150 starts image formation on a recording material P based on the received image data. Once the image formation has been started, the control unit 150 controls driving of the group of motors 161 (including the motor 134) by controlling the motor control unit 160, thereby performing control on driving of rotational members (e.g., the photosensitive members) included in the image forming unit 127, and control on conveyance of the recording material P. Also, the control unit 150 performs display control for displaying screens, such as a screen showing a state (e.g., an operational state) of the printer 100, on the display unit 180, and controls the group of sensors 170 for detecting a state of the recording material P or the printer 100.

<Motor Control Unit>

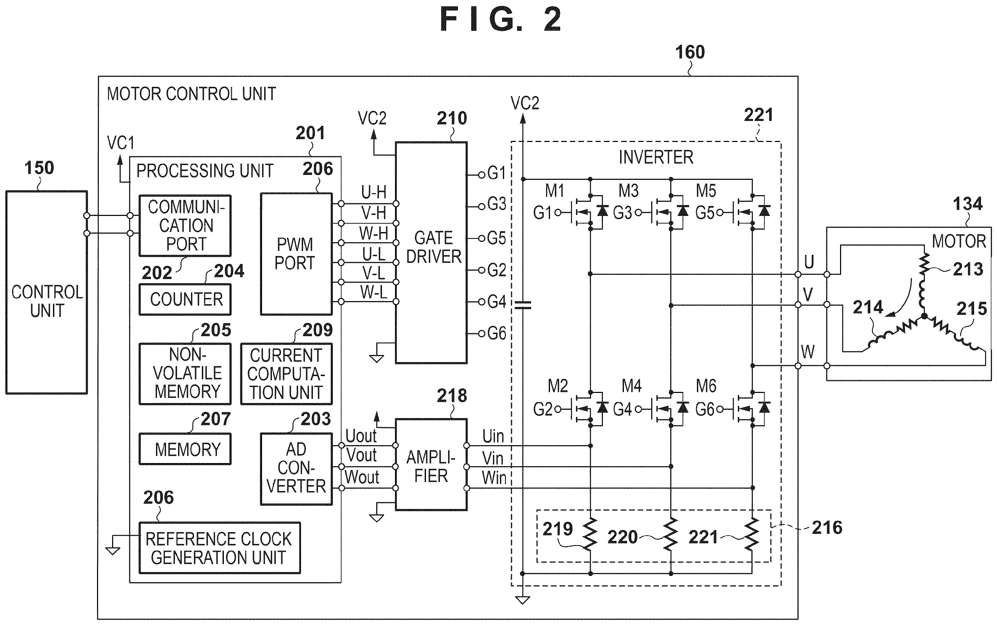

An exemplary configuration of the motor control unit 160 will be described using Fig. 2, with the motor 134 in the group of motors 161 serving as a typical example. The motor control unit 160 controls each motor included in the group of motors 161, including the motor 134.

The motor control unit 160 includes a processing unit 201, a gate driver 210 (a driving circuit), an amplifier 218, and an inverter 221 (an inverter circuit). The processing unit 201 is realized by, for example, a microcontroller. The processing unit 201 operates on a DC voltage VC1 supplied thereto from the low-voltage power source 123, and the gate driver 210 and the inverter 221 operate on a DC voltage VC2 supplied thereto from the low-voltage power source 123. The processing unit 201 includes a communication port 202, an AD converter 203, a counter 204, a nonvolatile memory 205, a reference clock generation unit 206, a memory 207, a pulse-width modulation (PWM) port 208, and a current computation unit 209.

The reference clock generation unit 206 generates a reference clock for operations of the processing unit 201. The counter 204 performs a count operation that is based on the reference clock generated by the reference clock generation unit 206. For example, measurement of a period of an input pulse and generation of a PWM signal are performed using a count value obtained by the counter 204. The processing unit 201 communicates with the control unit 150 via the communication port 202. Also, the processing unit 201 outputs a PWM signal for driving each switching element of the inverter 221 via the PWM port 208.

The inverter 221 is connected to the motor 134 to be controlled by the motor control unit 160. The motor 134 is a three-phase motor that includes windings (coils) 213 to 215 of three phases (U phase, V phase, and W phase). The inverter 221 is a three-phase inverter composed of six switching elements including three high-side switching elements M1, M3, and M5 that respectively correspond to the U phase, V phase, and W phase, and three low-side switching elements M2, M4, and M6 that respectively correspond to the U phase, V phase, and W phase. That is to say, the inverter 221 includes the high-side and low-side switching elements M1 and M2 connected to the U-phase coil 213, the high-side and low-side switching elements M3 and M4 connected to the V-phase coil 214, and the high-side and low-side switching elements M5 and M6 connected to the W-phase coil 215. Each switching element of the inverter 221 is composed of, for example, a transistor or an FET.

Gates G1 to G6 of the respective switching elements M1 to M6 are connected to corresponding terminals (G1 to G6) of the gate driver 210. The switching elements M1 to M6 are connected to the PWM port 208 via the gate driver 210. A PWM signal output from the PWM port 208 enables control on ON/OFF of each of the switching elements M1 to M6. For example, the switching elements M1 to M6 are placed in an ON state in a case where a PWM signal of a high (H) level has been output with respect to the corresponding gates G1 to G6, and is placed in an OFF state in a case where a PWM signal of a low (L) level has been output with respect to the corresponding gates G1 to G6.

The PWM port 208 includes six terminals that correspond to (the gates G1 to G6 of the respective) six switching elements M1 to M6 in the inverter 221. Specifically, the PWM port 208 includes high-side and low-side terminals (a U-H terminal and a U-L terminal) corresponding to the U phase, which output PWM signals to the gates G1 and G2 of the respective switching elements M1 and M2. The PWM port 208 further includes high-side and low-side terminals (a V-H terminal and a V-L terminal) corresponding to the V phase, which output PWM signals to the gates G3 and G4 of the respective switching elements M3 and M4. The PWM port 208 further includes high-side and low-side terminals (a W-H terminal and a W-L terminal) corresponding to the W phase, which output PWM signals to the gates G5 and G6 of the respective switching elements M5 and M6.

As stated earlier, PWM signals output from the PWM port 208 control ON/OFF of each of the switching elements M1 to M6 of the inverter 221. As a result, currents for excitation (excitation currents) flow from the inverter 221 to the coil 213 (U phase), the coil 214 (V phase), and the coil 215 (W phase) in the motor 134. The processing unit 201 controls the excitation current flowing through each of the coils 213 to 215 by controlling ON/OFF of each of the switching elements M1 to M6 in the inverter 221. In this way, the inverter 221 operates so as to excite a coil to be excited among the plurality of coils 213 to 215 in the motor 134 (excite an excitation phase to be excited among the plurality of excitation phases of the motor 134) as a result of driving of the plurality of switching elements M1 to M6.

A current detection unit 216 is configured to detect currents flowing through the coils of the respective phases in the motor 134. The current detection unit 216 includes current detection resistors 219 to 221 that are used in detection of currents (excitation currents) that have been supplied to the respective coils 213 to 215. The excitation currents that have been supplied to the respective coils 213 to 215 are converted into voltages by the current detection resistors 219 to 221, respectively. The post-conversion voltages are input to the amplifier 218 as Uin, Vin, and Win. The amplifier 218 outputs, to the processing unit 201, voltages Uout, Vout, and Wout that correspond to current values of the excitation currents that have been supplied to the respective coils 213 to 215 by amplifying and applying offset voltages to the input voltages Uin, Vin, and Win. The voltages Uout, Vout, and Wout are input to the AD converter 203 in the processing unit 201.

The AD converter 203 converts input voltages into digital values by performing analog/digital (A/D) conversion with respect to the input voltages, and outputs these digital values as values indicating the results of detection of the excitation currents. The current computation unit 209 performs predetermined computation with respect to the values output from the AD converter 203, and outputs the obtained values as current values of the excitation currents that have been supplied to the respective coils 213 to 215. The nonvolatile memory 205 functions as a holding unit that holds data and the like used in processing by the processing unit 201.

\<Processing Unit\>

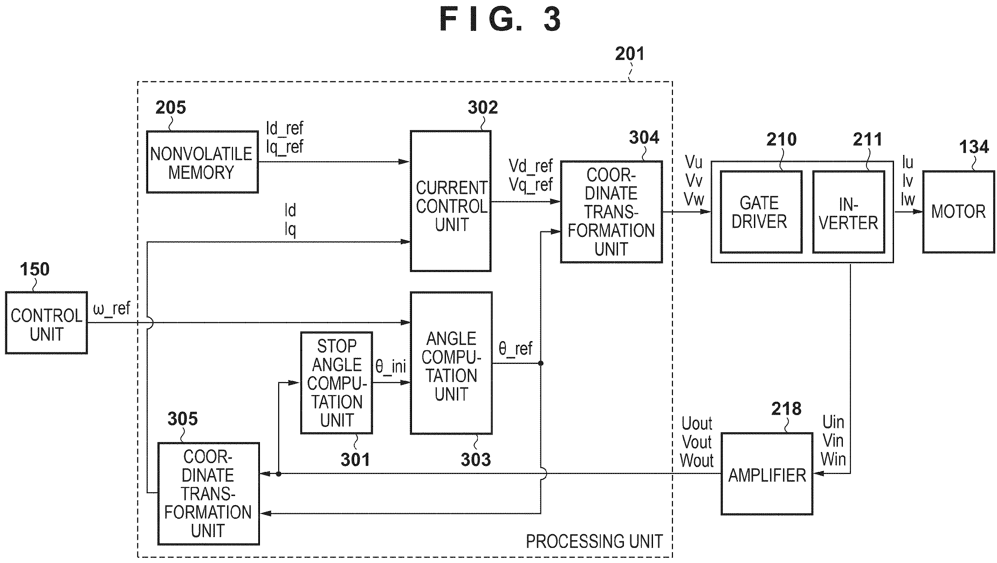

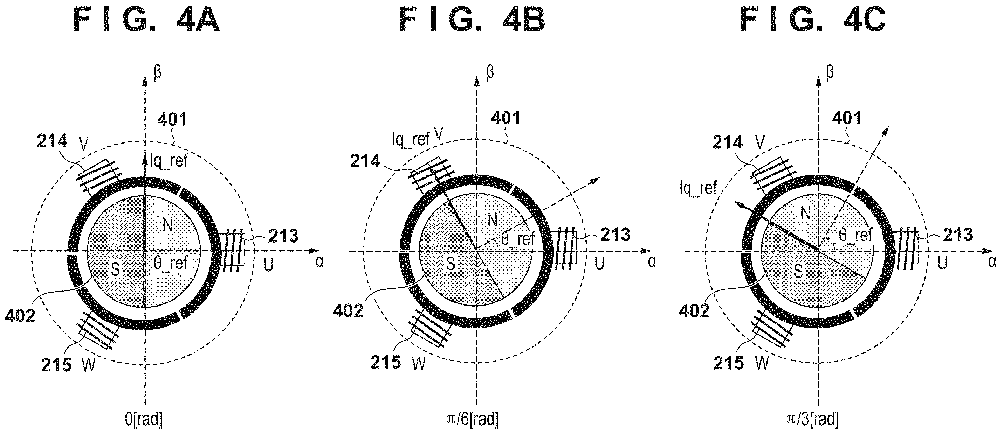

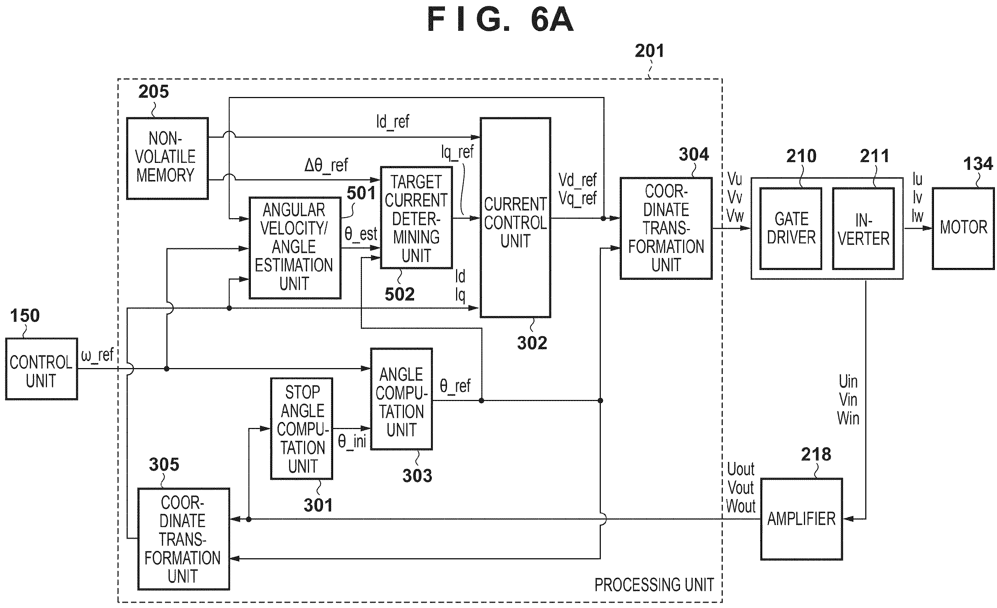

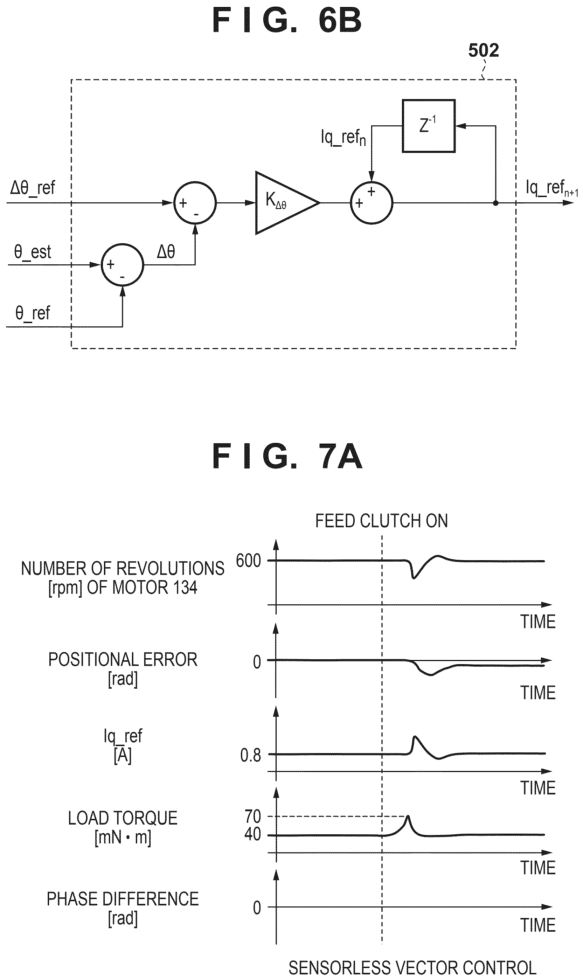

Using Fig. 3 and Figs. 4A to 4C, estimation of a rotor stop position and forced commutation control will be described as processing that is executed by the processing unit 201 in the present embodiment. Fig. 3 shows an exemplary configuration for performing forced commutation control of a comparative example as an exemplary configuration of the processing unit 201 included in the motor control unit 160, as opposed to a configuration of the present embodiment (Figs. 6A and 6B). Figs. 4A to 4C show an exemplary configuration and exemplary operations of the motor 134.

As shown in Figs. 4A to 4C, the motor 134 includes a stator 401 and a rotor 402. The stator 401 is provided with coils of three phases (U phase, V phase, and W phase), which include the U-phase coil 213, the V-phase coil 214, and the W-phase coil 215. The coils 213 to 215 are connected by a star connection. The rotor 402 is composed of a permanent magnet, and includes one pair of an N pole and an S pole (i.e., the number of pole pairs of the rotor 402 is one). The rotor 402 is configured to be capable of rotating about a rotation axis.

In the present embodiment, there are a total of six excitation phases, namely U-V, U-W, V-U, V-W, W-U, and W-V as combinations of coils that are excited (i.e., excitation phases) among the coils 213 to 215. Note that in the present specification, for example, "excite the U-V phase" refers to passing of an excitation current from the U-phase coil to the V-phase coil by driving the inverter 221 using a PWM signal output from the PWM port 208. When the U-V phase has been excited in this way, the excitation current flows from the U-phase coil 213 to the V-phase coil 214; at this time, the U-phase coil and the V-phase coil act as the N pole and the S pole, respectively.

A description is now given of estimation of a stop position (rotational position) of the rotor 402 in a case where the motor 134 (rotor 402) is at a stop. In the present embodiment, the stop position of the rotor 402 is detected by using a phenomenon where the inductance of each of the coils 213 to 215 changes depending on the stop position of the rotor 402. Specifically, the excitation phases (U-V, U-W, V-W, V-U, W-U, and W-V) are excited in order (i.e., a predetermined voltage is applied to each combination of coils in order). At this time, the excitation currents that flow through the coils composing each excitation phase are measured; based on the relative magnitude relationship between measured values, the magnitude relationships among the inductances of the respective coils are determined, and the stop position of the rotor 402 is determined (estimated) from the determination result.

In the present embodiment, it is assumed that a three-phase alternating-current phase of a case where currents (alternating currents) have been supplied to the respective coils 213 to 215 so as to achieve a d-axis current value Id = 0 [A], which will be described later, in a state where the N pole of the rotor 402 opposes the coil 213, is an electrical angle = 0 [rad]. In a case where the number of pole pairs of the rotor 402 is one as in the present example, provided that the position (phase) at which the rotor 402 opposes the coil 213 is a reference, for example, the position achieved by a counterclockwise rotation by a mechanical angle of $\pi$ [rad] is equivalent to the electrical angle $\pi$ [rad]. For the sake of convenience, regarding a rotational direction of the rotor 402, it is assumed that a counterclockwise rotation is a forward direction.

As shown in Fig. 4A, in a case where the N pole of the rotor 402 opposes the coil 213, a stop angle computation unit 301, which will be described later, outputs an initial electrical angle $\theta\_ini = 0$ [rad]. In the present embodiment, the initial electrical angle $\theta\_ini$ denotes an electrical angle that is equivalent to an initial excitation phase at the time of activation of the motor 134, and is an electrical angle corresponding to the stop position of the rotor 402.

Next, an example of forced commutation control (a comparative example) will be described, using a case of the initial electrical angle $\theta\_ini = 0$ [rad] as an example. In the present specification, forced commutation control is equivalent to motor control that switches the excitation phase of the motor 134 in accordance with a target rotational speed of the rotor 402. In the present comparative example, control that causes the rotor to rotate by forcibly passing a current to each coil in the motor with use of current command values Id_ref and Iq_ref, which have been set as fixed values (stored in the nonvolatile memory 205 in advance), is used as normal forced commutation control.

In the present example, current command values (d-axis and q-axis current command values) Id_ref and Iq_ref, which are equivalent to torque command values, are stored in the nonvolatile memory 205 in advance. A current control unit 302 performs current feedback control based on the current command values Id_ref and Iq_ref stored in the nonvolatile memory 205, and on current values (d-axis and q-axis current values) Id and Iq that are equivalent to output torques of the motor 103. Consequently, the current control unit 302 outputs voltage command values (d-axis and q-axis voltage command values) Vd_ref and Vq_ref. Note that Id_ref and Iq_ref denote torque command values in a rotor coordinate system, Id and Iq denote output torques in the rotor coordinate system, and Vd_ref and Vq_ref denote voltage command values in the rotor coordinate system.

Note that the rotor coordinate system is equivalent to a rotational coordinate system that uses a rotational position of the rotor 402 (a rotor position) as a reference. Also, a q-axis current (current component) is an example of a first current component that generates torque in the rotor 402 in the rotational coordinate system that uses a rotor position as a reference. A d-axis current (current component) is an example of a second current component that influences the intensity of the magnetic flux penetrating through the coils 213 to 215 in the motor 134 in the rotational coordinate system that uses a rotor position as a reference.

A coordinate transformation unit 304 executes processing for transformation from the rotor coordinate system (d, q) to a stator coordinate system (U, V, W). Also, a coordinate transformation unit 305 executes processing for transformation from the stator coordinate system (U, V, W) to the rotor coordinate system (d, q). In the present embodiment, control that causes the motor 134 to rotate by controlling Iq_ref under a setting of Id_ref = 0 [A] is performed as the forced commutation control. On the other hand, an angle computation unit 303 computes a command value (a command electrical angle θ_ref) for a rotational position of the rotor 402 (a rotor position) based on a speed command value w_ref indicating a target rotational speed of the rotor 402, which is input from the control unit 150 (an external controller). Specifically, the angle computation unit 303 accumulates a phase that is based on the speed command value w_ref to the initial electrical angle θ_ini corresponding to the stop position of the rotor 402 in every predetermined period. In this way, the angle computation unit 303 computes the command electrical angle θ_ref, which is a command value for the rotational position of the rotor 402, and outputs the computation result to the coordinate transformation units 304 and 305.

Based on the command electrical angle θ_ref output from the angle computation unit 303, the coordinate transformation unit 304 transforms the voltage command values Vd_ref and Vq_ref in the rotor coordinate system into voltage command values Vu, Vv, and Vw in the stator coordinate system, and outputs them. The voltage command values Vu, Vv, and Vw are equivalent to voltages applied to the U-phase coil (coil 213), the V-phase coil (coil 214), and the W-phase coil (coil 215).

Figs. 4A to 4C show examples of rotation of the rotor 402 for a case where the forced commutation control has been performed for the motor 134, as exemplary operations of the motor 134. In these figures, arrows indicated by thick lines are vectors indicating the torque command value Iq_ref. In the forced commutation control, the rotational position of the rotor 402 (the rotor position) is controlled in accordance with the torque command value Iq_ref that has been set in advance. Fig. 4A, Fig. 4B, and Fig. 4C show the rotational position of the rotor 402 for cases where the command electrical angle θ_ref has been switched to 0 [rad], π/6 [rad], and π/3 [rad] in order, respectively. In this way, the rotational position of the rotor 402 is controlled in accordance with switching of the command electrical angle θ_ref.

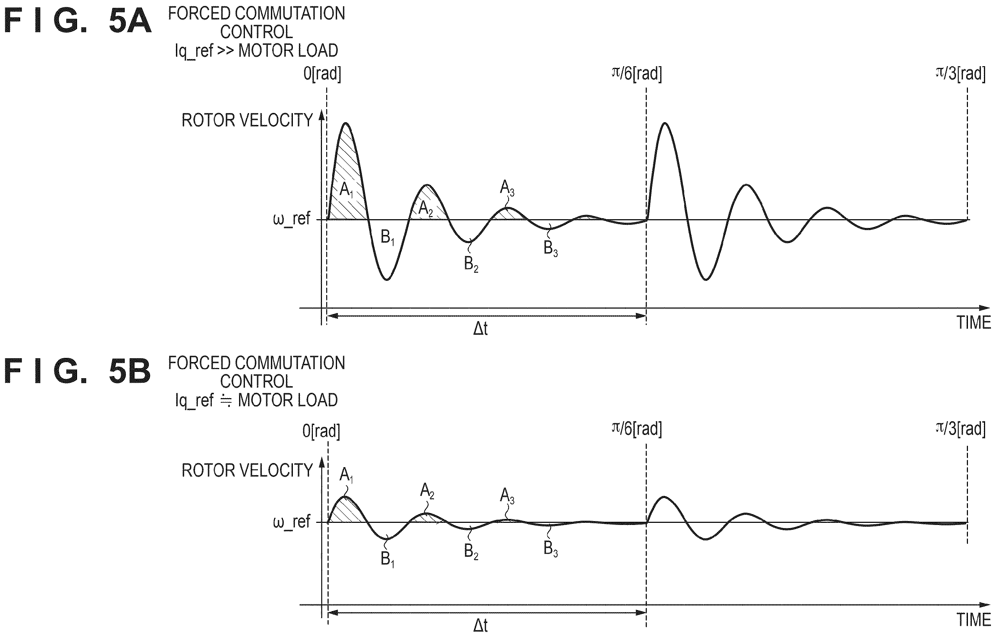

Figs. 5A and 5B show examples of changes in the rotational speed of the rotor 402 (transient response) for a case where the forced commutation control has been performed so that the command electrical angle θ_ref is switched to 0 [rad], π/6 [rad], and π/3 [rad] in order. Using the present examples, a description is given of differences in the behavior of the rotor 402 for a case where the magnitude of the torque command value relative to a load torque (motor load) of the motor 134 varies. Fig. 5A shows a case where a torque command value Iq_ref that is sufficiently large relative to the load torque has been set (Iq_ref >> motor load). Fig. 5B shows a case where a torque command value Iq_ref that is appropriate for the load torque (close to the load torque) has been set (Iq_ref ≈ motor load).

As shown in Fig. 5A, in a case where a torque command value Iq_ref that is sufficiently large relative to the load torque has been set, the rotational speed of the rotor 402 changes while repeating damped vibration, that is to say, relatively large vibration occurs in the rotor 402. Specifically, each time the command electrical angle θ_ref is switched to π/6 [rad], relatively large vibration occurs in the rotor 402 when the actual electrical angle θ of the rotor 402 follows the command electrical angle θ_ref (the rotational speed of the rotor 402 follows the speed command value w_ref).

On the other hand, as shown in Fig. 5B, in a case where a torque command value Iq_ref close to the load torque has been set, the amount of vibration of the rotor 402 (the amount of fluctuations in the rotational speed) is small compared to a case where a torque command value that is sufficiently large relative to the load torque has been set (Fig. 5A). Note that, although a description is omitted here, in sensorless vector control for a case where the d-axis current value is set at 0, the rotor 402 rotates with almost no vibration when appropriate control is performed.

Here, the difference (error) between the (actual) electrical angle θ of the rotor 402 and the command electrical angle θ_ref in a time period Δt shown in Figs. 5A and 5B (a period of switching of the command electrical angle θ_ref) is defined as Δθ (i.e., Δθ = θ - θ_ref). In this case, Δθ is calculated using the following formula.

$$\Delta\theta = \int_{0}^{\Delta t} (\omega - \omega\_ref)\, dt$$

The larger the peak value of damped vibration of the rotational speed of the rotor 402, the larger Δθ. Therefore, it is apparent that Δθ increases in proportion to the ratio between the torque command value Iq_ref and the motor load (load torque).

When the torque command value Iq_ref is set to have a large value relative to the load torque in this way, the difference (phase difference) Δθ between the command electrical angle θ_ref and the electrical angle θ of the rotor 402 (equivalent to the rotor position) becomes large. Conversely, when the torque command value Iq_ref is reduced to approach the load torque, the phase difference Δθ between the command electrical angle θ_ref and the electrical angle θ of the rotor 402 becomes small. This means that the torque command value Iq_ref can be set at an appropriate value relative to the load torque based on Δθ.

In view of this, the motor control unit 160 (processing unit 201) of the present embodiment executes processing for determining the torque command value Iq_ref for the forced commutation control in accordance with Δθ so as to prevent the torque command value (current command value) Iq_ref from becoming excessively large relative to the motor load (load torque). Specifically, in the present embodiment, an estimated electrical angle θ_est is calculated based on an excitation voltage excited in the coils of the respective phases in the motor 134, and the estimated electrical angle θ_est is used in place of the (actual) electrical angle θ of the rotor 402. That is to say, with use of the phase difference Δθ = θ_est - θ_ref, the torque command value Iq_ref is determined in accordance with Δθ. In this way, a technique to control the motor through the forced commutation control while maintaining an appropriate torque command value tailored to the motor load (load torque) is realized.

<Forced Commutation Control (Torque-Based Control)>

Next, the forced commutation control of the present embodiment will be described with reference to Figs. 6A and 6B. Hereinafter, the forced commutation control of the present embodiment will be also referred to as "torque-based control". Fig. 6A shows an exemplary configuration of the processing unit 201 in the motor control unit 160 (Fig. 2) according to the present embodiment. In the configuration shown in Fig. 6A, an angular velocity/angle estimation unit 501 and a target current determining unit 502 are added compared to the exemplary configuration shown in Fig. 3. Other than these, the configuration (the stop angle computation unit 301, current control unit 302, angle computation unit 303, and coordinate transformation units 304 and 305) is similar to the exemplary configuration (comparative example) of Fig. 3, and similar processing is executed. Fig. 6B shows an exemplary configuration of the target current determining unit 502 shown in Fig. 6A. Here, a description will be provided with a focus on the differences from the exemplary configuration of Fig. 3.

The angular velocity/angle estimation unit 501 executes processing for obtaining an estimated electrical angle θ_est (an estimated value of the rotor position) by estimating the rotational position of the motor 134 (the rotor position). The present processing uses each parameter related to the motor 134 (a torque constant, the inductance of each coil, and a resistance), the voltage command values Vd_ref and Vq_ref, and the excitation voltage of each of the coils 213 to 215. The excitation voltage of each of the coils 213 to 215 is computed from the current values Id and Iq of the currents flowing through each coil. The angular velocity/angle estimation unit 501 outputs the obtained estimated electrical angle θ_est to the target current determining unit 502. As such, the angular velocity/angle estimation unit 501 is an example of an estimation unit that estimates the rotational position of the rotor 402 in the motor 134 based on the current values of the currents detected by the current detection unit 216 (detection unit). The estimated value of the rotational position is obtained as the estimated electrical angle θ_est.

As stated earlier, in general cases, the speed command value is used as motor speed information that is necessary for estimating the rotor position with use of the excitation voltages excited in the coils in the motor. Such a method of estimation of the rotor position can be used in, for example, sensorless vector control. In the sensorless vector control, there are cases where the rotational speed does not converge on the target rotational speed (target speed) and motor control becomes difficult if the excitation phase is switched based on the estimated electrical angle in a low-speed rotational state where the estimated value of the rotor position (the estimated electrical angle) is unstable because sufficient excitation voltages are not generated.

On the other hand, in the technique of the present embodiment, the timing to switch the excitation phase of the motor is determined based on the speed command value. In this case, it is possible to cause the rotational speed of the motor (rotor) to follow the target rotational speed more reliably. This makes it easy to estimate the rotor position even when the motor is in the low-speed rotational state, compared to the sensorless vector control.

As shown in Fig. 6A and Fig. 6B, the estimated electrical angle θ_est (the estimated value of the rotor position) obtained by the angular velocity/angle estimation unit 501, the command electrical angle θ_ref generated by the angle computation unit 303, and a phase difference command value Δθ_ref are input to the target current determining unit 502. The phase difference command value Δθ_ref is a command value (target value) related to the difference (phase difference) Δθ between the estimated electrical angle θ_est and the command electrical angle θ_ref. The phase difference command value Δθ_ref is determined in advance based on, for example, driving conditions of the motor 134, and stored in the nonvolatile memory 205. The target current determining unit 502 uses the phase difference command value Δθ_ref that has been read out from the nonvolatile memory 205.

In the forced commutation control of the present embodiment, the target current determining unit 502 determines the current command value Iq_ref for the q-axis current (a current component that generates torque in the rotor 402) based on the phase difference Δθ between the command electrical angle θ_ref (a command value for the rotational position of the rotor 402) and the estimated electrical angle θ_est (estimated value) obtained by the angular velocity/angle estimation unit 501.

Specifically, the target current determining unit 502 determines the current command value Iq_ref so that the phase difference Δθ approaches the phase difference command value Δθ_ref. In the present embodiment, the target current determining unit 502 performs computation corresponding to the configuration shown in Fig. 6B in every predetermined control period (a period in which the speed command value w_ref is output from the control unit 150 to the motor control unit 160). In this way, the target current determining unit 502 determines a current command value Iq_ref$_{n+1}$ corresponding to the next control period (the (n + 1)-th control period) as a torque command value. Specifically, the target current determining unit 502 computes a torque command value (current command value) Iq_ref$_{n+1}$ corresponding to the (n + 1)-th control period from the following formula based on the n-th torque command value Iq_ref$_n$ with use of a predetermined proportional gain K$_{\Delta\theta}$.

$$Iq\_ref_{n+1} = Iq\_ref_n + K_{\Delta\theta} \times (\Delta\theta\_ref - \Delta\theta)$$

In the above formula, K$_{\Delta\theta}$ × (Δθ_ref - Δθ) is equivalent to a control amount that is based on the phase difference Δθ between the estimated electrical angle θ_est and the command electrical angle θ_ref. In this way, the target current determining unit 502 determines a value obtained by multiplying the difference between the phase difference command value Δθ_ref and the phase difference Δθ by the predetermined proportional gain K$_{\Delta\theta}$ as the control amount that is based on the phase difference Δθ. In the forced commutation control (torque-based control) of the present embodiment, the torque command value Iq_ref$_{n+1}$ in the next ((n + 1)-th) control period is determined (i.e., the torque command value Iq_ref is updated) by adding this control amount to the torque command value Iq_ref$_n$ in the previous (n-th) control period. In this way, in every predetermined control period, the target current determining unit 502 updates the current command value Iq_ref by determining the control amount that is based on the phase difference Δθ, and by adding this control amount to the current command value Iq_ref that has been determined with respect to the previous control period.

The target current determining unit 502 outputs the torque command value (current command value) Iq_ref$_{n+1}$ obtained through the above computation as a target value for control on the q-axis current by the current control unit 302. Note that the current control unit 302 uses the torque command value (current command value) Id_ref stored in the nonvolatile memory 205 as a target value for control on the d-axis current, similarly to the configuration shown in Fig. 3.

The current control unit 302 is configured to control the currents supplied to the coils of the respective phases in the motor 134 in accordance with the torque command value (current command value) Iq_ref determined by the target current determining unit 502. Specifically, the current control unit 302 performs current feedback control based on the torque command value Iq_ref (for the q-axis current) from the target current determining unit 502, the torque command value Id_ref (for the d-axis current) from the nonvolatile memory 205, and the current values Id and Iq (equivalent to output torques of the motor 134). Consequently, the current control unit 302 outputs voltage command values (d-axis and q-axis voltage command values) Vd_ref and Vq_ref.

Finally, as has been described using Fig. 3, the coordinate transformation unit 304 transforms the voltage command values Vd_ref and Vq_ref in the rotor coordinate system into the voltage command values Vu, Vv, and Vw in the stator coordinate system based on the command electrical angle θ_ref output from the current control unit 302, and outputs them. Note that although not shown in Fig. 3 and Fig. 6A, a PWM signal is generated based on the voltage command values Vu, Vv, and Vw, and the generated PWM signal is output to the gate driver 210 as shown in Fig. 2. Consequently, the gate driver 210 and the inverter 221 supply the excitation current to each coil in the motor 134.

In the forced commutation control (torque-based control) of the present embodiment, the torque command value Iq_ref$_{n+1}$ is determined by adding the control amount that is based on the phase difference Δθ between the estimated electrical angle θ_est and the command electrical angle θ_ref to the torque command value Iq_ref$_n$ in the previous (n-th) control period. The present control technique is not limited to this; for example, the torque command value Iq_ref$_{n+1}$ may be calculated, for example, based on the control amount that is based on the phase difference Δθ without using the torque command value Iq_ref$_n$.

<Exemplary Operations of Motor>

Next, with reference to Figs. 7A to 7C, a description is given of exemplary operations of the motor 134 for a case where the above-described forced commutation control (torque-based control) according to the present embodiment is applied to the printer 100. As described above, the printer 100 of the present embodiment uses the motor 134 as a driving source for feed members and conveyance members, such as the feed roller 114 and the conveyance roller 115.

In the present example, a case is assumed in which a plurality of recording materials P are conveyed continuously in the printer 100. In this case, a fluctuation in a load placed on the motor 134 occurs at a timing at which the feed roller 114 feeds the recording materials P stacked (stowed) in the feed cassette 113, and occurs periodically as a result of feeding the plurality of recording materials P one by one. Note that the operation of feeding a recording material P by the feed roller 114 is started at a timing at which the feed clutch 136 has been switched to an ON state by a driving signal supplied to the feed clutch 136. At this timing, the load placed on the motor 134 fluctuates.

During conveyance of a recording material P, for example, a load torque of approximately 40 [mN·m] is steadily placed on the motor 134. In this case, it is assumed that a load torque of, for example, approximately 70 [mN·m] at a maximum is placed in a direction of deceleration of the motor 134 at a timing at which a subsequent recording material P is fed from the feed cassette 113 (a feed timing).

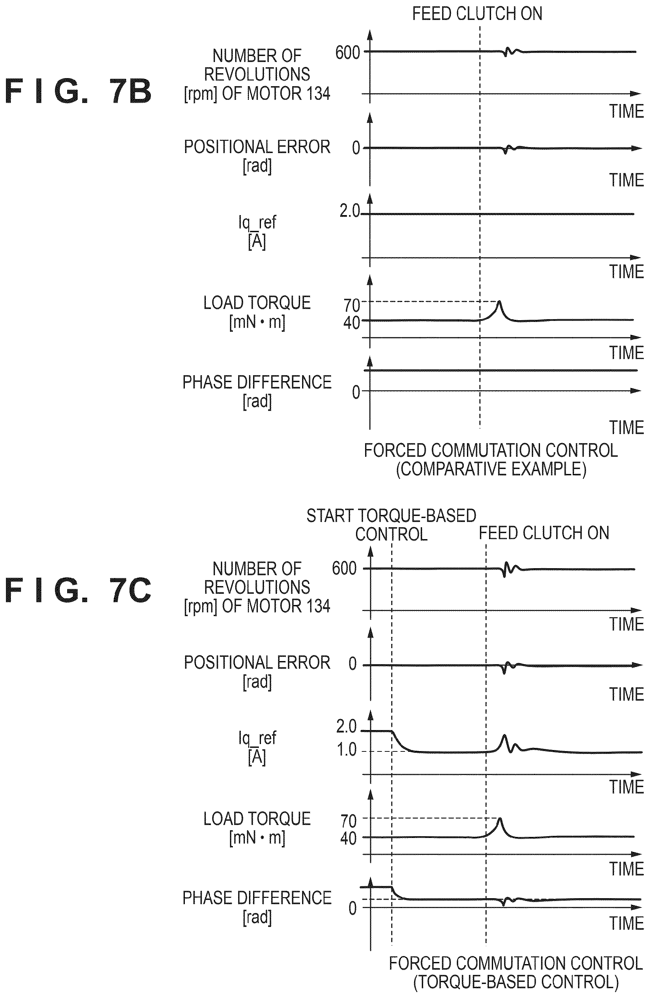

Figs. 7A to 7C show examples of changes in each parameter related to the motor 134 for a case where the target rotational speed of the motor 134 is set at 600 [rpm]. Fig. 7A, Fig. 7B, and Fig. 7C respectively show cases where the sensorless vector control, the normal forced commutation control (the comparative example), and the forced commutation control (torque-based control) of the present embodiment have been performed. A positional error of the motor 134 is a value obtained by applying time integration to the difference between the speed command value w_ref and a speed estimated value w_est, and indicates an error of the estimated electrical angle $\theta\_est$ of the rotor 402 relative to a positional command value (command electrical angle $\theta\_ref$).

In the example of Fig. 7A, in a case where the motor 134 has been driven through the sensorless vector control, the torque command value Iq_ref is controlled to have an appropriate value in harmony with the increase and decrease in the load torque. Note that the rotational speed (the number of revolutions) of the motor 134 decreases at a timing at which the load torque increases from 40 [mN·m] to 70 [mN·m] (i.e., at a feed timing of a recording material P). Thereafter, once a certain extent of time period has elapsed, the rotational speed of the motor 134 changes so as to follow the speed command value. In this way, the positional error of the motor 134 increases in a time period in which the rotational speed of the motor 134 decreases.

In the example of Fig. 7B, the motor 134 is driven through the normal forced commutation control (comparative example) while the torque command value Iq_ref is set at a fixed value. As described above, in the normal forced commutation control, it is necessary to set a torque command value that is sufficiently large relative to the load torque (larger than the maximum value of the load torque). Therefore, in the present example, Iq_ref is set at 2 [A]. In the normal forced commutation control, the positional error of the motor 134 does not increase even if the load torque increases from 40 [mN·m] to 70 [mN·m] due to the start of feeding of a recording material P. This is because a value larger than the maximum value of the load torque is set as the torque command value. However, when a torque command value that is excessive relative to the load torque placed on the motor 134 is set in this way, the driving efficiency (electrical efficiency) of the motor 134 becomes low compared to the sensorless vector control. Furthermore, this also leads to a temperature increase in the coils 213 to 215 in the motor 134.

In the example of Fig. 7C, the motor 134 is driven through the forced commutation control (torque-based control) of the present embodiment. In the present example, Iq_ref = 2 [A] that is similar to the example of Fig. 7B is set as an initial value of the torque command value Iq_ref, and the torque command value Iq_ref is controlled in harmony with the load torque. In the present example, the torque command value Iq_ref decreases in harmony with the load torque from the timing of the start of the forced commutation control, and finally converges on Iq_ref = 1.0 [A]. Note that this value is higher than the torque command value Iq_ref (= 0.8 [A]) for a case where the sensorless vector control is performed.

Thereafter, when the load torque increases from 40 [mN·m] to 70 [mN·m] (i.e., when a recording material P has been fed), the torque command value Iq_ref increases. This is because the phase difference $\Delta\theta$ between the command electrical angle $\theta\_ref$ and the estimated electrical angle $\theta\_est$ has become smaller than a target phase difference $\Delta\theta\_ref$ due to the fluctuations in the load torque. As a result of the phase difference $\Delta\theta$ becoming smaller than the target phase difference $\Delta\theta\_ref$, the torque command value Iq_ref increases so as to cause the phase difference $\Delta\theta$ to approach the target phase difference $\Delta\theta$. Thereafter, the phase difference $\Delta\theta$ follows the target phase difference $\Delta\theta\_ref$, and then the torque command value Iq_ref decreases in harmony with the load torque. During this time, the fluctuations in the positional error of the motor 134 are substantially similar to those of the normal forced commutation control, as shown in Fig. 7C. That is to say, the positional error of the motor 134 is maintained at the same level as that of the normal forced commutation control even if the load torque increases from 40 [mN·m] to 70 [mN·m] due to the start of feeding of a recording material P.

In this way, by applying the forced commutation control (torque-based control) of the present embodiment as the forced commutation control for the motor 134, the positional control accuracy of the same level as that of the normal forced commutation control can be realized. Also, although the electrical efficiency of the motor 134 may become low compared to the sensorless vector control, the decrease in the electrical efficiency in the normal forced commutation control can be prevented. That is to say, driving of the motor 134 can be controlled with high efficiency while maintaining the positional control accuracy of the same level as that of the normal forced commutation control.

Note that although the present embodiment has been described in relation to an example of application to the motor 134 that drives rollers of the printer 100 for feeding or conveying a recording material P as an example of application of the forced commutation control (torque-based control) of the present embodiment, no limitation is intended by this. For example, application to another application, such as a motor used in driving of joints of a manipulator, may be possible. In the case of the manipulator, a high positional control accuracy is required in each actuator to maintain the positional accuracy of a tip coordinate system. For example, there is a case that uses a configuration in which an encoder is mounted on a brushless motor. By replacing such a motor with a brushless motor to which the control of the present embodiment is applied, the same functions can be realized by an inexpensive configuration that includes a small number of components.

<Processing Procedure>

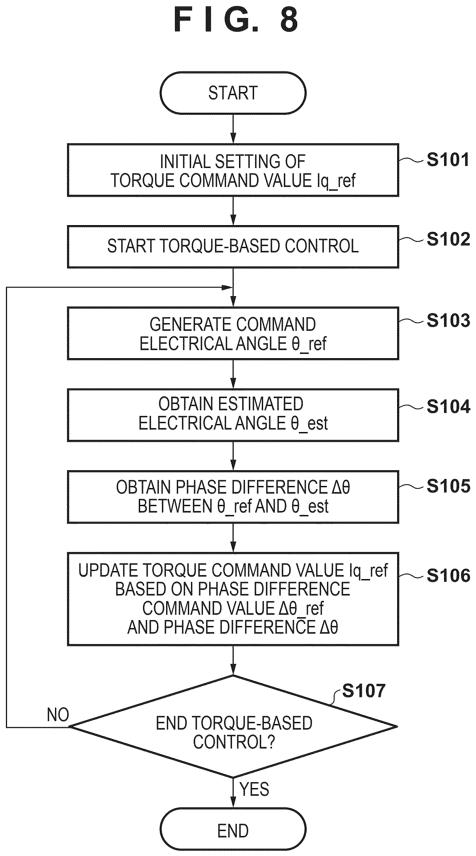

Fig. 8 is a flowchart showing an exemplary procedure of control on the motor 134 that is executed by the motor control unit 160 (processing unit 201) in the printer 100 of the present embodiment. When the control unit 150 has instructed the processing unit 201 to execute the forced commutation control that is based on the target rotational speed (speed command value w_ref), the processing unit 201 starts processing according to the present control procedure.

In step S101, the processing unit 201 accepts a setting of an initial value β of the torque command value (current command value) Iq_ref (Iq_ref = β) from the control unit 150. The initial value β is set by the control unit 150 so that it exceeds the expected maximum value of the load torque placed on the motor 134, for example. In the example of Fig. 7C, Iq_ref = 2 [A] is set as the initial value. Upon completion of the initial setting of the torque command value Iq_ref, the processing unit 201 starts the torque-based control as the forced commutation control for the motor 134 in step S102, and causes processing to proceed to step S103.

In step S103, the processing unit 201 (angle computation unit 303) generates the command electrical angle θ_ref based on the speed command value w_ref. Next, in step S104, the processing unit 201 (angular velocity/angle estimation unit 501) obtains the estimated electrical angle θ_est (the estimated value of the rotor position) through the above-described computation that uses the excitation voltages of the respective coils 213 to 215 in the motor 134.

After obtaining the estimated electrical angle θ_est, the processing unit 201 (target current determining unit 502) executes processing for updating the torque command value Iq_ref (determining the next torque command value $Iq\_ref_{n+1}$) in steps S105 and S106. First, in step S105, the processing unit 201 calculates the phase difference Δθ between the estimated electrical angle θ_est and the command electrical angle θ_ref. Furthermore, in step S106, the processing unit 201 updates the torque command value Iq_ref based on the phase difference Δθ and the phase difference command value Δθ_ref. Specifically, a control amount that is based on the phase difference Δθ between the estimated electrical angle θ_est and the command electrical angle θ_ref is calculated by multiplying the difference between the phase difference Δθ and the phase difference command value Δθ_ref by the predetermined proportional gain $K_{\Delta\theta}$. Furthermore, the new torque command value (current command value) $Iq\_ref_{n+1}$ is determined by adding the calculated control amount to the torque command value $Iq\_ref_n$ in the previous (n-th) control period; as a result, the torque command value Iq_ref is updated.

When the new torque command value $Iq\_ref_{n+1}$ has been determined (the torque command value Iq_ref has been updated), the processing unit 201 (current control unit 302) controls the currents flowing through the coils 213 to 215 in the motor 134 with use of the determined torque command value $Iq\_ref_{n+1}$. Thereafter, in step S107, the processing unit 201 determines whether to end the torque-based control. In a case where the torque-based control is to be ended, the processing unit 201 ends processing according to the procedure of Fig. 8; in a case where the torque-based control is not to be ended, the processing unit 201 repeats processing of steps S103 to S106 by returning to processing of step S103.

As described above, in the motor control unit 160 of the present embodiment, the processing unit 201 (current detection unit 216) detects the currents flowing through the coils of the respective phases in the motor 134. The processing unit 201 (angular velocity/angle estimation unit 501) estimates the rotational position of the rotor 402 in the motor 134 based on the current values of the currents detected by the current detection unit 216. In motor control that switches the excitation phase of the motor in accordance with a target rotational speed of the rotor 402 (forced commutation control), the processing unit 201 (target current determining unit 502) determines the current command value Iq_ref for the q-axis current based on the phase difference Δθ between a command value (command electrical angle θ_ref) and an estimated value (estimated electrical angle θ_est) of the rotational position of the rotor 402. The processing unit 201 (current control unit 302) controls the currents supplied to the coils of the respective phases in the motor 134 in accordance with the determined current command value Iq_ref.

According to the forced commutation control (torque-based control) of the present embodiment, a torque command value (current command value) can be set in accordance with a load placed on the motor 134 while realizing the positional control accuracy of the same level as that of normal forced commutation control. In this way, a decrease in the driving efficiency (electrical efficiency) of the motor 134 can be prevented, and an increase in the temperature of each coil caused by the excitation current can be suppressed. Therefore, according to the present embodiment, more efficient motor control can be realized in the forced commutation control.

Second Embodiment

The first embodiment has been described in relation to an example of execution of forced commutation control in which torque-based control is applied while a phase difference command value $\Delta\theta\_ref$, which is a command value (target value) related to the phase difference $\Delta\theta$, is set at a fixed value. In this case, the above-described torque-based control can be realized with a simple configuration by storing the phase difference command value $\Delta\theta\_ref$ in the nonvolatile memory 205 in advance.

In the second embodiment, a case is assumed in which the motor control unit 160 performs acceleration control for accelerating the rotor 402 in the motor 134 that is undergoing steady rotation. During the acceleration of the rotor 402, the load torque of the motor 134 increases. Therefore, in a case where a phase difference target value $\Delta\theta\_ref$ is determined in consideration of the acceleration control for the rotor 402, it is necessary to determine the phase difference target value $\Delta\theta\_ref$ so that a larger torque command value (current command value) Iq_ref can be set than in a case where the rotor 402 undergoes only steady rotation. This can lead to extra power consumption at the time of steady rotation of the rotor 402. Furthermore, addition of a torque command value that has been determined in advance to a torque command value at the time of steady rotation can be expected as a method of increasing the torque command value Iq_ref during the execution of the acceleration control for the rotor 402. In this case, there is a possibility that an appropriate torque command value cannot be set if the load torque at the time of steady rotation changes.

In view of this, in a case where the acceleration control for accelerating the rotor 402 that is undergoing steady rotation is to be executed, the motor control unit 160 (processing unit 201) of the present embodiment determines a second current command value that is used in the acceleration control based on a first current command value (Iq_ref$_{ste}$) that was used during the steady rotation of the rotor 402 and on an acceleration $\alpha$ of the rotor 402. In this way, even in a case where the load torque at the time of steady rotation of the rotor 402 is different, it is possible to prevent excess currents from being supplied to the coils 213 to 215 of the respective phases in the motor 134 during the execution of the acceleration control. Below, a description of matters that are the same as those of the first embodiment is omitted.

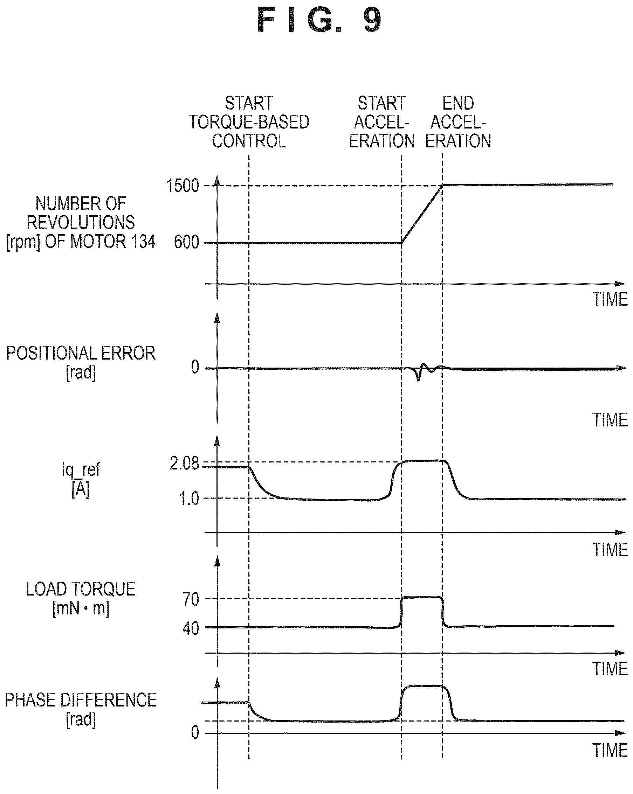

Fig. 9 shows examples of changes in each parameter related to the motor 134 for a case where the target rotational speed of the rotor 402 has been changed from 600 [rpm] to 1500 [rpm]. It is assumed that a load torque of approximately 40 [mN·m] is steadily placed on the motor 134 during the steady rotation of the rotor 402, similarly to the examples that have been described using Figs. 7A to 7C in the first embodiment. In the present example, the phase difference $\Delta\theta$ of a case where the speed command value $\omega\_ref = 600$ [rpm] and the load torque is 40 [mN·m] is used as a reference.

In the example of Fig. 9, the motor control unit 160 (processing unit 201) performs the acceleration control for the rotor 402 by adding a constant $\alpha = 1.8$ to the speed command value w_ref in every control period (50 $\mu$s). This constant $\alpha$ is equivalent to the acceleration of the rotor 402. A current command value (torque command value) Iq_ref$_{acc}$ that is used in the acceleration control for the rotor 402 is calculated from the following formula based on the current command value (torque command value) Iq_ref$_{ste}$ that was used during the steady rotation of the rotor 402 and on the acceleration $\alpha$ of the rotor 402.

$$Iq\_ref_{acc} = Iq\_ref_{ste} (1 + K_{acc} \cdot \alpha)$$

In this way, the processing unit 201 determines the torque command value Iq_ref$_{acc}$ (second current command value) that is used in the acceleration control by adding, to the torque command value Iq_ref$_{ste}$, a control amount obtained by multiplying the torque command value Iq_ref$_{ste}$ (first current command value) at the time of steady rotation of the rotor 402 by the acceleration $\alpha$ and the acceleration gain K$_{acc}$. The acceleration gain K$_{acc}$ is a gain for calculating a control amount to be added to the torque command value Iq_ref$_{ste}$ at the time of steady rotation of the rotor 402 in accordance with the acceleration $\alpha$. The acceleration gain K$_{acc}$ can be determined in advance based on at least one of the acceleration $\alpha$ and a load torque that can be expected as a load torque placed on the motor 134.

In the present example, a load torque of 40 [mN·m] is placed on the motor 134 during the steady rotation of the rotor 402. In this state, the torque command value at the time of steady rotation is set at Iq_ref$_{ste}$ = 1 [A] so as to maintain the phase difference $\Delta\theta$ at the phase difference command value $\Delta\theta\_ref$. Thereafter, the acceleration control for the rotor 402 is started. In the present example, it is assumed that K$_{acc}$ = 0.6. In this case, the torque command value used in the acceleration control is set at Iq_ref$_{acc}$ = 1·(1 + 0.6·1.8) = 2.08 [A].

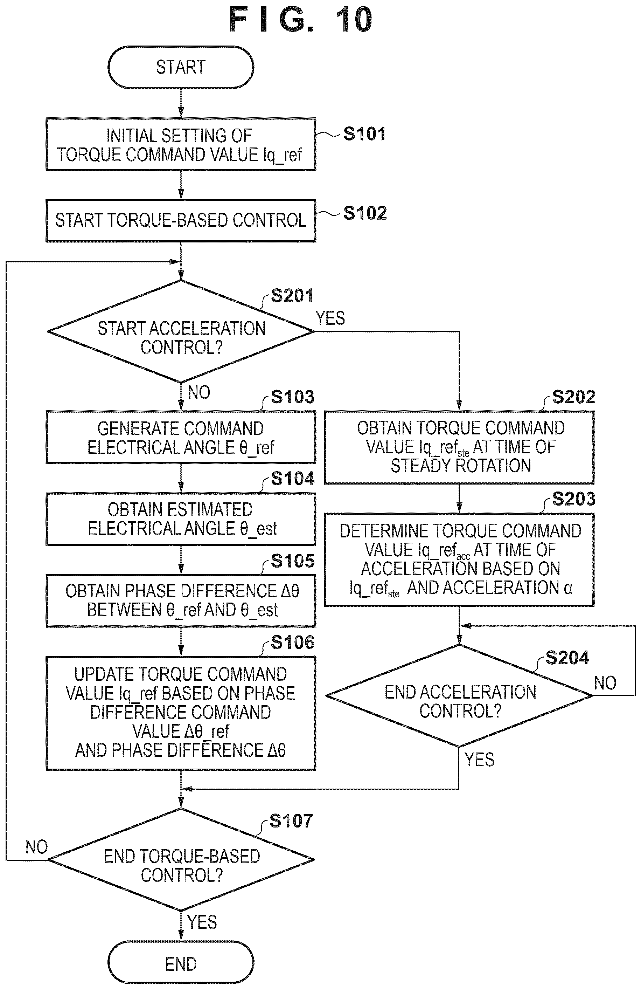

Fig. 10 is a flowchart showing an exemplary procedure of control on the motor 134 that is executed by the motor control unit 160 (processing unit 201) in the printer 100 of the present embodiment. Similarly to the first embodiment (Fig. 8), when the control unit 150 has instructed the processing unit 201 to execute the forced commutation control that is based on the target rotational speed (speed command value w_ref), the processing unit 201 starts processing according to the present control procedure.

Steps S101 and S102 are similar to those of the first embodiment. Once the processing unit 201 has started the torque-based control as the forced commutation control for the motor 134, it proceeds from processing of step S102 to processing of step S201.

In step S201, the processing unit 201 determines whether to start the acceleration control for the rotor 402. This determination may be made based on, for example, a change in the speed command value w_ref indicating the target rotational speed of the rotor 402 input from the control unit 150 (an external controller). Also, the acceleration $\alpha$ may be obtained based on the speed command value w_ref. In a case where the acceleration control is not to be performed (in a case where the rotor 402 is to undergo steady rotation), the processing unit 201 proceeds to processing of step S103. In steps S103 to S107, processing similar to that of the first embodiment is executed. On the other hand, in a case where the acceleration control is to be started, the processing unit 201 proceeds to processing of step S202.

In step S202, when starting the acceleration control for the rotor 402, the processing unit 201 obtains the torque command value Iq_ref that was determined with respect to the previous control period as a torque command value (first current command value) $Iq\_ref_{ste}$ at the time of steady rotation of the rotor 402. Next, in step S203, the processing unit 201 determines the torque command value $Iq\_ref_{acc}$ that is used at the time of acceleration of the motor 134 as described above based on the torque command value $Iq\_ref_{ste}$ at the time of steady rotation, the acceleration $\alpha$, and the acceleration gain $K_{acc}$.

In this way, the processing unit 201 determines the torque command value (second current command value) $Iq\_ref_{acc}$ at the time of acceleration by using the torque command value Iq_ref that was determined with respect to the previous control period as the torque command value (first current command value) $Iq\_ref_{ste}$ at the time of steady rotation of the rotor 402. Thereafter, if the processing unit 201 has determined to end the acceleration control for the rotor 402 in step S204, it proceeds to processing of step S107.

The processing unit 201 determines whether to end the torque-based control. In a case where the torque-based control is to be ended, the processing unit 201 ends processing according to the procedure of Fig. 10; in a case where the torque-based control is not to be ended, the processing unit 201 repeats the above-described processing by returning to processing of step S201.

In this way, in the present embodiment, the torque command value (second current command value) $Iq\_ref_{acc}$ that is used in the acceleration control is determined based on the torque command value (first current command value) $Iq\_ref_{ste}$ at the time of steady rotation of the rotor 402. In this way, even in a case where the load torque at the time of steady rotation of the rotor 402 is different, it is possible to prevent excess currents from being supplied to the coils 213 to 215 of the respective phases in the motor 134 during the execution of the acceleration control. Furthermore, a torque command value can be set appropriately in accordance with a load placed on the motor 134, also at the time of the acceleration control for the rotor 402.

Note that the processing unit 201 may determine the torque command value (second current command value) $Iq\_ref_{acc}$ that is used in the acceleration control by using a phase difference command value $\Delta\theta\_ref$ different from the one for the time of steady rotation during the acceleration control for the rotor 402. Specifically, the processing unit 201 may use a first phase difference command value $\Delta\theta\_ref_{ste}$ during the steady rotation of the rotor 402, and determine the second current command value $Iq\_ref_{acc}$ by using a second phase difference command value $\Delta\theta\_ref_{acc}$ that has been determined based on the first current command value $Iq\_ref_{ste}$ and the acceleration $\alpha$ during the execution of the acceleration control. Through such processing, too, a torque command value can be set appropriately in accordance with a load placed on the motor 134 at the time of the acceleration control for the rotor 402.

According to the present disclosure, more efficient motor control can be realized in the forced commutation control.

Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

**Claims**

1. A motor control apparatus (160) that controls a motor (134), comprising:

   detection means (216) for detecting currents flowing through coils of respective phases in the motor;
   estimation means (501) for estimating a rotational position of a rotor of the motor based on current values of the currents detected by the detection means;
   a determining means (502) for, in motor control that switches an excitation phase of the motor in accordance with a target rotational speed of the rotor, determining a current command value for a current component that generates torque in the rotor, based on a phase difference between a command value for the rotational position and an estimated value for the rotational position obtained by the estimation means; and
   a control means (302) for controlling currents supplied to the coils of the respective phases in the motor in accordance with the current command value determined by the determining means.

2. The motor control apparatus according to claim 1, further comprising

   storage means for storing a phase difference command value,
   wherein the phase difference command value is determined in advance based on a driving condition of the motor.

3. The motor control apparatus according to claim 1 or 2, wherein
   in every predetermined control period, the determining means updates the current command value by determining a control amount that is based on the phase difference and adding the control amount to the current command value that was determined for an immediately previous control period.

4. The motor control apparatus according to claim 3, wherein
   the determining means determines, as the control amount, a value obtained by multiplying a difference between a phase difference command value and the phase difference by a predetermined gain.

5. The motor control apparatus according to any one of claims 1 to 4, further comprising

   computation means for computing the command value for the rotational position based on a speed command value which indicates the target rotational speed and which is input from an external controller,
   wherein the computation means computes the command value for the rotational position by accumulating a phase that is based on the speed command value to an initial electrical angle corresponding to a stop position of the rotor.

6. The motor control apparatus according to any one of claims 1 to 5, wherein
   in a case where acceleration control for accelerating the rotor that is undergoing steady rotation is to be executed, the determining means determines a second current command value that is used in the acceleration control, based on a first current command value used during the steady rotation of the rotor and acceleration of the rotor.

7. The motor control apparatus according to claim 6, wherein
   the determining means determines the second current command value by adding, to the first current command value, a control amount obtained by multiplying the first current command value by the acceleration and an acceleration gain.

8. The motor control apparatus according to claim 7, wherein
   the acceleration gain is determined in advance based on at least one of the acceleration and a load torque expected as a load torque placed on the motor.

9. The motor control apparatus according to claim 6, wherein
   during the steady rotation of the rotor, the determining means uses a first phase difference command value, and during execution of the acceleration control, the determining means determines the second current command value by using a second phase difference command value determined based on the first current command value and on the acceleration.

10. The motor control apparatus according to any one of claims 1 to 9, wherein

the control means controls the currents flowing through the coils of the respective phases in the motor based on a first current component and a second current component in a rotational coordinate system that is based on the rotational position of the rotor, the first current component generating torque in the rotor, and the second current component influencing an intensity of magnetic flux penetrating through the coils in the motor, and

the determining means determines a current command value for the first current component based on the phase difference.

11. The motor control apparatus according to claim 10, further comprising

storage means for storing a current command value for the second current component, the current command value being determined in advance,

wherein in the motor control, the control means determines a voltage command value in the rotational coordinate system based on the current command value for the first current component determined by the determining means, and on the current command value for the second current component stored in the storage means.

12. The motor control apparatus according to claim 11, further comprising

an inverter circuit that includes a plurality of switching elements that are respectively connected to corresponding coils in the motor; and a driving circuit configured to supply currents to the coils of the respective phases in the motor by driving the inverter circuit in accordance with the voltage command value determined by the control means.

13. An image forming apparatus (100) that forms an image on a recording material, comprising:

a motor (134) configured to drive a load; and a motor control apparatus (160) according to any one of claims 1 to 12, being configured to control the motor (134).

14. The image forming apparatus according to claim 13, wherein
the load is a conveyance roller that conveys the recording material.

15. The image forming apparatus according to claim 13, wherein
the load is a feed roller that feeds the recording material stowed in a feed unit to a conveyance path.

# F I G. 1A

# F I G. 1B

FIG. 2

F I G. 3

# FIG. 4A

0[rad]

# FIG. 4B

π/6[rad]

# FIG. 4C

π/3[rad]

EP 4 769 934 A1

**F I G. 5A** FORCED COMMUTATION CONTROL
Iq_ref >> MOTOR LOAD

**F I G. 5B** FORCED COMMUTATION CONTROL
Iq_ref ≒ MOTOR LOAD

EP 4 769 934 A1

# FIG. 6A

EP 4 769 934 A1

# F I G. 6B

502

# F I G. 7A

FEED CLUTCH ON

NUMBER OF REVOLUTIONS [rpm] OF MOTOR 134 — 600

TIME

POSITIONAL ERROR [rad] — 0

TIME

Iq_ref [A] — 0.8

TIME

LOAD TORQUE [mN・m] — 70 / 40

TIME

PHASE DIFFERENCE [rad] — 0

TIME

SENSORLESS VECTOR CONTROL

# F I G. 7B

NUMBER OF REVOLUTIONS [rpm] OF MOTOR 134 — 600 — TIME

POSITIONAL ERROR [rad] — 0 — TIME

Iq_ref [A] — 2.0 — TIME

LOAD TORQUE [mN·m] — 70 / 40 — TIME

PHASE DIFFERENCE [rad] — 0 — TIME

FEED CLUTCH ON

FORCED COMMUTATION CONTROL (COMPARATIVE EXAMPLE)

# F I G. 7C

NUMBER OF REVOLUTIONS [rpm] OF MOTOR 134 — 600 — TIME

POSITIONAL ERROR [rad] — 0 — TIME

Iq_ref [A] — 2.0 / 1.0 — TIME

LOAD TORQUE [mN·m] — 70 / 40 — TIME

PHASE DIFFERENCE [rad] — 0 — TIME

START TORQUE-BASED CONTROL     FEED CLUTCH ON

FORCED COMMUTATION CONTROL (TORQUE-BASED CONTROL)

# F I G. 8

START

INITIAL SETTING OF
TORQUE COMMAND VALUE Iq_ref
— S101

START TORQUE-BASED CONTROL
— S102

GENERATE COMMAND
ELECTRICAL ANGLE θ_ref
— S103

OBTAIN ESTIMATED
ELECTRICAL ANGLE θ_est
— S104

OBTAIN PHASE DIFFERENCE Δθ
BETWEEN θ_ref AND θ_est
— S105

UPDATE TORQUE COMMAND VALUE Iq_ref
BASED ON PHASE DIFFERENCE
COMMAND VALUE Δθ_ref
AND PHASE DIFFERENCE Δθ
— S106

S107

NO   END TORQUE-BASED
CONTROL?

YES

END

# F I G. 9

# F I G. 10

```
                    ┌─────────────┐
                    │    START    │
                    └──────┬──────┘
                           ↓
        ┌──────────────────────────────┐
        │   INITIAL SETTING OF          │ ── S101
        │ TORQUE COMMAND VALUE Iq_ref   │
        └──────────────┬───────────────┘
                       ↓
        ┌──────────────────────────────┐
        │ START TORQUE-BASED CONTROL    │ ── S102
        └──────────────┬───────────────┘
                       ↓
              ◇ START ACCELERATION ◇ ── S201 ──YES──┐
              ◇     CONTROL?        ◇               │
                       │NO                          ↓
        ┌──────────────────────────┐   ┌──────────────────────────┐
        │ GENERATE COMMAND         │   │ OBTAIN TORQUE COMMAND     │ S202
        │ ELECTRICAL ANGLE θ_ref   │S103│ VALUE Iq_ref_ste AT TIME OF│
        └──────────────┬───────────┘   │ STEADY ROTATION           │
                       ↓               └──────────────┬───────────┘
        ┌──────────────────────────┐                 ↓
        │ OBTAIN ESTIMATED         │S104 ┌──────────────────────────┐
        │ ELECTRICAL ANGLE θ_est   │     │ DETERMINE TORQUE COMMAND  │ S203
        └──────────────┬───────────┘     │ VALUE Iq_ref_acc AT TIME OF│
                       ↓                 │ ACCELERATION BASED ON     │
        ┌──────────────────────────┐     │ Iq_ref_ste AND ACCELERATION α│
        │ OBTAIN PHASE DIFFERENCE Δθ│S105 └──────────────┬───────────┘
        │ BETWEEN θ_ref AND θ_est   │                    ↓
        └──────────────┬───────────┘        ◇ END ACCELERATION ◇ S204 ─NO─┐
                       ↓                     ◇   CONTROL?      ◇          │
        ┌──────────────────────────┐              │YES ←─────────────────┘
        │ UPDATE TORQUE COMMAND    │S106           │
        │ VALUE Iq_ref BASED ON PHASE│             │
        │ DIFFERENCE COMMAND        │              │
        │ VALUE Δθ_ref              │              │
        │ AND PHASE DIFFERENCE Δθ   │              │
        └──────────────┬───────────┘              │
                       ↓←─────────────────────────┘
        ◇ END TORQUE-BASED ◇ S107
   NO── ◇   CONTROL?      ◇
                       │YES
                       ↓
                 ┌──────────┐
                 │   END    │
                 └──────────┘
```

# EUROPEAN SEARCH REPORT

**Application Number**

EP 25 22 2099

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 7 346174 B2 (CANON KK) 19 September 2023 (2023-09-19) | 1,6, 10-15 | INV. H02P23/20 |
| A | * paragraph [0023] - paragraph [0086]; figures 1-11 * | 2-5,7-9 | H02P25/03 |
| X | JP 2018 019510 A (CANON KK) 1 February 2018 (2018-02-01) | 1,6, 10-15 | |
| A | * paragraph [0026] - paragraph [0097]; figures 1-13 * | 2-5,7-9 | |
| A | US 2022/308514 A1 (ITOH MASATOSHI [JP]) 29 September 2022 (2022-09-29) * the whole document * | 1-15 | |

**TECHNICAL FIELDS SEARCHED (IPC)**

H02P

The present search report has been drawn up for all claims

| Place of search | Date of completion of the search | Examiner |
|---|---|---|
| Munich | 30 April 2026 | Roussel, Maxime |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................................

& : member of the same patent family, corresponding
document

EPO FORM 1503 03.82 (P04C01)

# EP 4 769 934 A1

## ANNEX TO THE EUROPEAN SEARCH REPORT
## ON EUROPEAN PATENT APPLICATION NO.

EP 25 22 2099

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2026

| Patent document cited in search report | | Publication date | Patent family member(s) | | Publication date |
|---|---|---|---|---|---|
| JP 7346174 | B2 | 19-09-2023 | JP | 7346174 B2 | 19-09-2023 |
| | | | JP | 2021040412 A | 11-03-2021 |
| JP 2018019510 | A | 01-02-2018 | NONE | | |
| US 2022308514 | A1 | 29-09-2022 | JP | 7678687 B2 | 16-05-2025 |
| | | | JP | 2022150844 A | 07-10-2022 |
| | | | US | 2022308514 A1 | 29-09-2022 |

EPO FORM P0459

For more details about this annex : see Official Journal of the European Patent Office, No. 12/82

28

**REFERENCES CITED IN THE DESCRIPTION**

**Patent documents cited in the description**

• JP 2022147188 A